Europäisches Patentamt

European Patent Office

Office européen des brevets

(11) Publication number: **0 080 136**
**B1**

(12) **EUROPEAN PATENT SPECIFICATION**

(45) Date of publication of patent specification: **23.07.86**

(21) Application number: **82110472.6**

(22) Date of filing: **12.11.82**

(51) Int. Cl.⁴: **F 16 L 55/10**

(54) **Safety arrangement for emergency disconnectable connecting device for fluid transfer elements.**

(30) Priority: **19.11.81 FR 8121677**

(43) Date of publication of application:
**01.06.83 Bulletin 83/22**

(45) Publication of the grant of the patent:
**23.07.86 Bulletin 86/30**

(84) Designated Contracting States:
**AT BE CH DE FR GB IT LI LU NL SE**

(56) References cited:
**DE-C- 642 045**
**FR-A-2 065 003**
**GB-A-1 020 540**
**GB-A-1 472 750**

(73) Proprietor: **FMC EUROPE S.A.**
**Route de Clérimois**
**F-89103 Sens(Yonne) (FR)**

(72) Inventor: **Le Devehat, Eugene Roger, Elektr. and Hydr.-Ing.**
**94, Grande Rue**
**F-89100 Saligny (FR)**

(74) Representative: **Bardehle, Heinz, Dipl.-Ing.**
**Patent- und Rechtsanwälte Bardehle-Pagenberg-Dost-Altenburg & Partner Postfach 86 06 20**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a safety arrangement for an emergency disconnectable connecting device for fluid transfer elements connected through said device by their flanges.

There are actually known devices (DE—A—2 845 167) for coupling and uncoupling two flanges of pipe or tube that can be quickly disconnected in case of urgency. Such devices are mainly applied to installations for loading and unloading fluid products, in particular, fluid oil products. Said quick coupling and uncoupling devices are of the type comprising a collar with three circularly arcuate articulated elements. The circle determined thereby may be closed through a link articulated to one of the circularly arcuate elements and provided with a wedge that comes to bear on a ramp made on one of the two other elements. A control jack resting on one of the articulated elements acts through a cap upon a nut disposed above the wedge. Through the action of the jack, a safety pin is broken by the link which tips over outwardly.

The three articulated elements have each in cross-section a frusto-conical form closely following the jointive edge portions of both tube flanges to be connected and disconnected in urgency. The united edge portions of both tube flanges have a frusto-conical form corresponding to the hollow frusto-conical form of the arcuate elements of the device.

Each of the connected elements comprises a valve and both valves of said two elements are associated with a known common control of the type having a connection between valves and which can be easily dissociated in case of urgency disconnection.

The object of the present invention is a safety arrangement for an emergency-disconnectable connecting device for two fluid transfer elements comprising valves with a common dissociable control. This object is achieved according to the invention by a safety arrangement as defined in claim 1.

The connection or contact between the valve control and the control jack of the emergency disconnector is realized by link means permitting misalignment of said jack.

Said misalignment is obtained by an angular deviation imposed upon said jack which is hinged to a pivot secured to one of the arcuate elements of the emergency-disconnectable connecting device.

The end of the rod of said jack comprises a conical head for cooperation with a V-shaped profiled groove formed in the nut of a link of the emergency-disconnectable connecting device in such way that a certain angle of aperture of the valves corresponds to a certain angle of deviation of the jack thereby resulting in escape of the conical head of the jack in respect to the V-shaped groove of the nut.

The connection between the valve control and the control jack rod of the emergency-disconnectable connecting device comprises a movable carriage mounted to the end of the jack rod the body of which is fixed, said movable carriage being capable of contacting an element in the valve control upon movement toward the nut of a link of the emergency-disconnectable connecting device, said movable carriage acting upon said valve control element when the valve closure control was not effective.

An overstroke of said carriage which may be slidable, after the slidable carriage has moved aside the valve control element, permits the slidable carriage to meet the nut of the link of the emergency-disconnectable connecting device so as to provide disconnection.

Other characteristics and advantages of this invention will appear from the following description which is made with reference to the attached drawings on which:

— Figures 1 and 2 are plane top views, and partially in cross-section for one of the elements, of the arrangement according to the invention in two different positions of the control jack of the emergency-disconnectable connecting device;
— Figure 3 is an end elevational view of the arrangement of the form of embodiment of Figures 1 and 2;
— Figure 4 is a working drawing representing the control jack of the emergency-disconnectable connecting device in different positions with respect to the valve control;
— Figures 5, 6 and 7 are respective cross-sectional, front and top views of a manual locking means which can be provided with an arrangement according to the invention;
— Figure 8 is a front partly elevational view showing the location of the manual locking means on the device according to the invention;
— Figures 9 to 12 are top view of another form of embodiment of an arrangement according to the invention in four different positions;

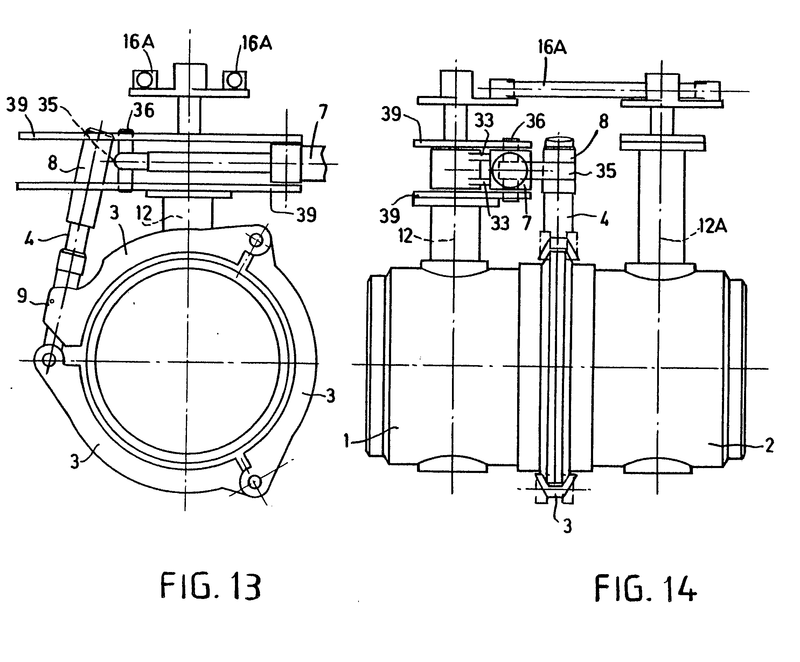

— Figures 13 and 14 are respective front and laterally elevational views of an arrangement according to the form of embodiment of figures 9 to 12;
— Figures 15 and 16 are top plane views of still a further form of embodiment of an arrangement according to the invention in two different operative positions.

Each of the connected elements comprising a valve are flanged elements; they are an element 1 connected to a loading arm and an element 2 connected to a vessel.

The coupling of those elements is ensured by an emergency-disconnectable connecting device of the type having a clamping collar with three arcuate elements 3 articulated to one another and clampingly surrounding the flanges of both elements 1 and 2, which are brought into contact with one another during the connection. The circle which determines the arcuate elements 3 closes through a link 4 articulated to one of those elements and provided with a wedge 5 coming to bear on a ramp 6 made on one of the two other arcuate elements. A control jack 7 is provided so as to act on a nut 8 disposed on the link. Under the action of the jack a safety pin 9 is broken by the link which then tips over outwardly thereby resulting into disconnection.

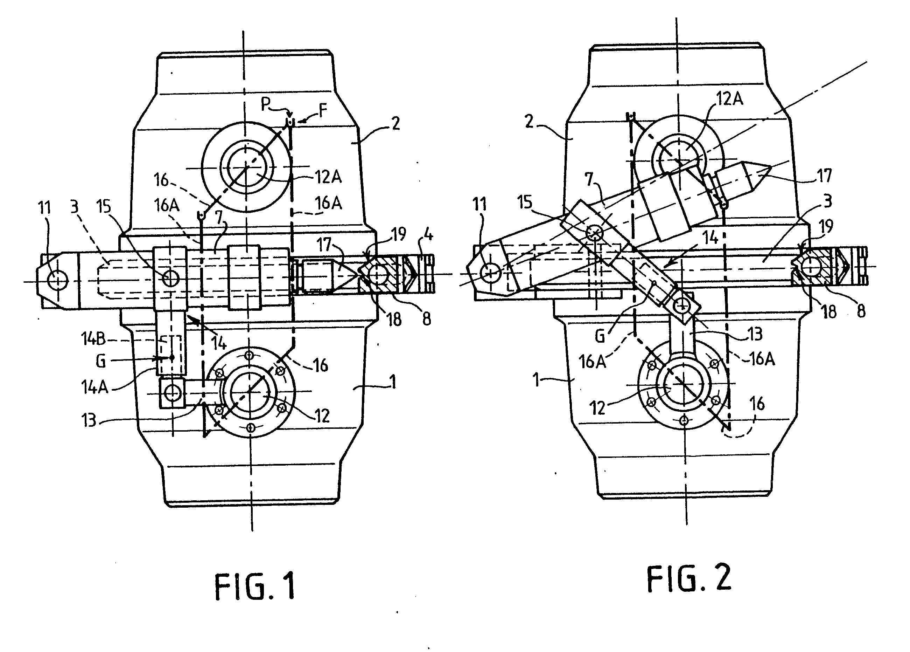

In the form of embodiment shown in figures 1 to 4, and 8, the jack is articulated through an eye 10 to a pivot 11 of a console 11A secured to one of the arcuate elements 3. The pivot 11 is disposed parallel to the control shafts 12, 12A of the valves of connected elements 1 and 2. The jack 7 can therefore deviate angularly about the pivot 11 and the link means 13, 14 hinged to one another connect the jack 7 to the control shaft 12 of the valve of element 1 connected to the arm. The link 13 is fixed to the shaft 12 of the valve and the link 14 is hinged to a pivot 15 fixed to the body of the jack. The link 14 is, more precisely, made of two portions. It comprises a sleeve 14A which is hinged to the pivot 15 and a rod 14B received in the sleeve 14A and hinged to the link 13. A shear pin G normally connects the rod 14B and the sleeve 14A and the breakage of said pin entails dissociation of the assembly consisting of the angular deviation jack 7 and the emergency-disconnectable connecting device (3 to 8) from the control shaft 12 of the valve of element 1 connected to the arm.

It must be noted moreover that the shafts 12 and 12A of the valves are connected in their motions by a known arrangement with a deformable parallelogram comprising a bar 16 secured to each axis and two connecting rods 16A connecting both bars such that there can occur a dissociation of both connecting rods and one of the bars at the time of the emergency disconnection. Such loose connection between both connecting rods and the respective bars is obtained by providing a fork at the end of each connecting rod, the fork F coming to ride on an end pivot P of said bar.

Apart from its hinged connection to the pivot 11 the angular deviation jack 7 is characterized by having a conical head 17 at the end of its rod, said head being intended for cooperation with a V-shaped profiled groove 18 formed in the nut 8.

The combination of the characteristic of angular deviation of the control jack 7 subordinated to the rotation of the shaft 12 of the valve of element 1 connected to the arm, and of the characteristic of the conical head 17 of said jack cooperating with the groove 18 of the nut 8 of the emergency-disconnectable connecting device is mainly intended to prevent any disconnection in the limiting conditions of closure of the valves.

It must be noted that the groove 18 is provided in relation with an escape chamfer 19 cut into the nut 8 after said groove.

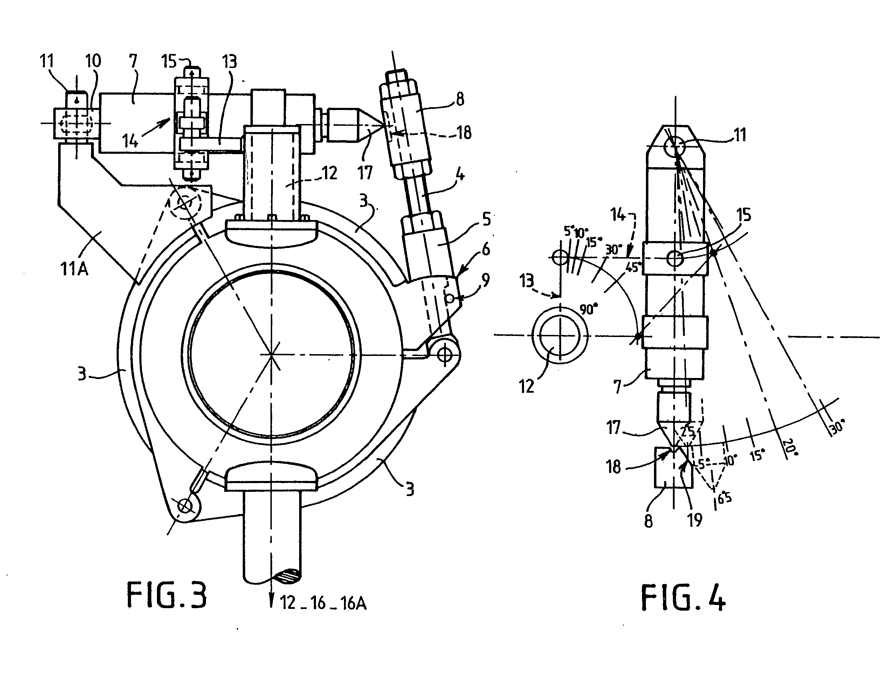

Figure 4 illustrates a comparison between the rotation of the valve on its shaft 12 and the deviation of the control jack 7.

When the summit of the conical head 17 of the rod of jack 7 lies in the alignment of the bottom of the groove 18 formed in nut 8 or very close to such alignment, the pushing action of the jack rod results in a direct action upon said nut 8 of the emergency-disconnectable connecting device, and the tipping over of its link 4 thereby to provide the actual disconnection.

As soon as the summit of the conical head 17 moves away from the alignment with the bottom of the groove 18, or its very close proximity, the conical head escapes from the nut 8 and moves to meet the escape chamfer 19 of the nut 8 and disconnection is no longer possible.

The working drawing of figure 4 shows in a non limitative example a deviation angle of 2.5° of the jack 7 when its conical head 17 is in contact with the chamfer 19 which corresponds to an angle of aperture of the valves of 5°. The total escape of the conical head occurs when the deviation angle is 6.5° and the aperture angle is 10°.

Total aperture of the valves (angle of 90°) corresponds to a deviation angle of the jack of 20°.

In the chosen example the length of the link 14 is equal to the distance between the hinging pivot 11 of the jack 7 on the console 11A and the hinging pivot 15 of the link 14 on jack 7.

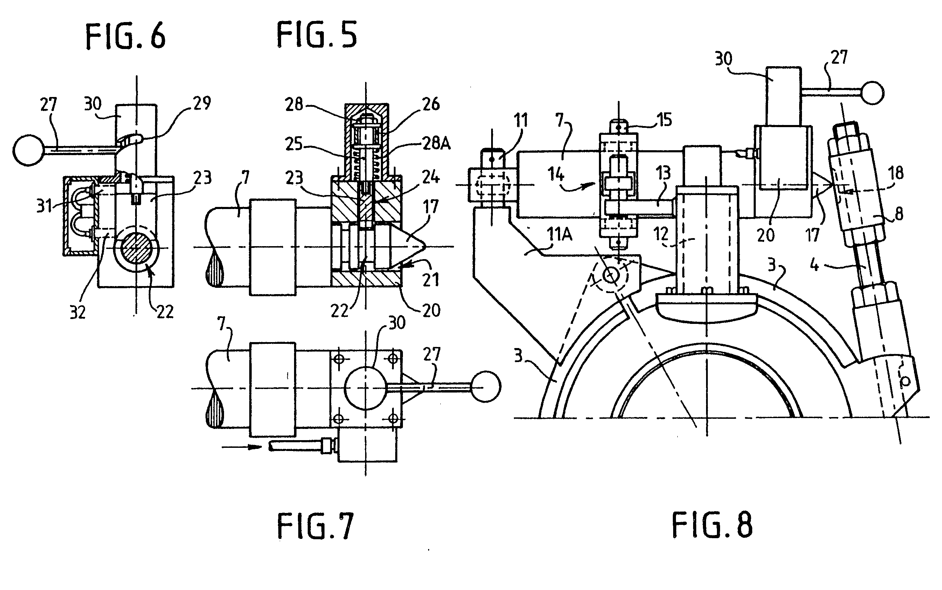

The arrangement in accordance with the invention can be completed by manual locking means of the control jack 7 of the emergency-disconnectable connecting device (3 to 8). Such locking means is intended for preventing disconnection of the connecting device when the arm is in a resting position or during the operation when both valves are closed (figures 5 to 8).

Such locking means comprises a housing 20 having a bore 21 therein for passage of the jack rod which is hollowed out behind the conical head 17 to form an annular groove 22 intended for receiving a knife 23 movable in translation in a slot 24 formed in the housing 20 so as to open perpendicularly into the bore 21.

The translating piece 23 comprises a rod 25 on which a sleeve 26 extending into a manual control lever 27 is slidingly mounted. The sleeve is disposed between a nut 28 forming an abutment at the end of the rod and a spring 28A slidingly put on the rod and resting on the housing. A lever 27 passes through a curved slot 29 formed in a cylinder 30 secured to the housing 20. The path imposed upon by the curve 29, depending on the direction of movement of said lever in the slot makes the translating knife penetrate or not the annular groove 22 of the rod of jack 7. Sensors for detecting the position of the translating piece 23 in the housing 20 are disposed so that one 31 detects the position of the piece 23 in the unlocked position permitting emergency disconnection and the other 32, the position of the piece 23 in the locked position to prevent urgency disconnection.

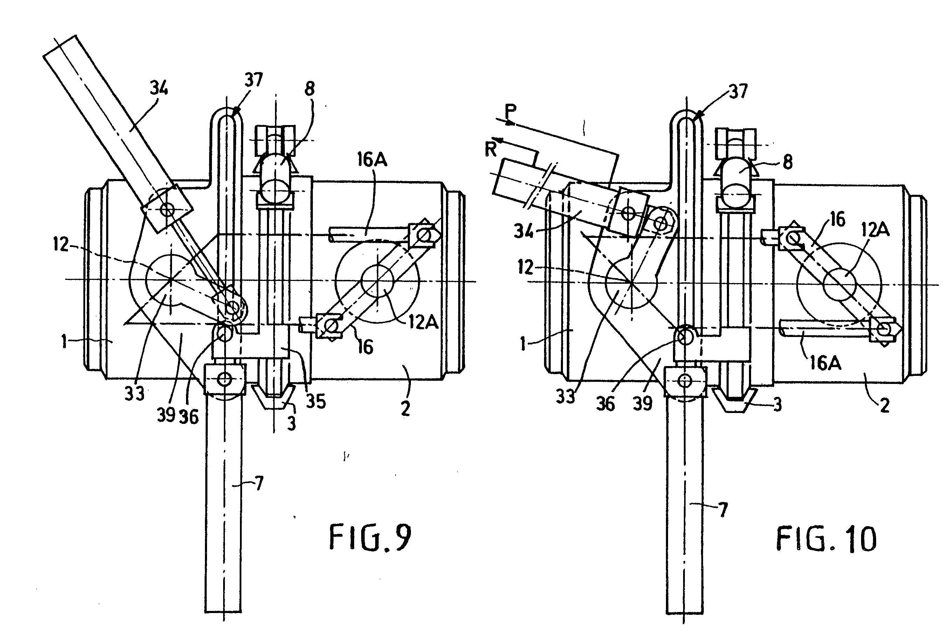

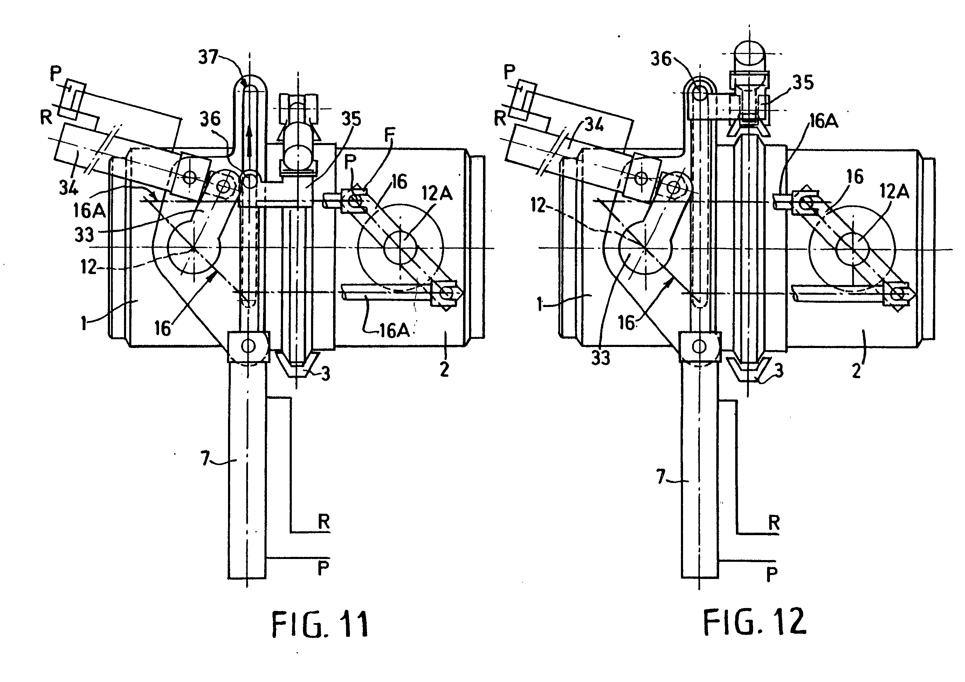

In the form of embodiment shown in figures 9 to 12, there is also a direct connection between the valve control and the jack of the emergency-disconnectable connecting device.

These figures also show the emergency-disconnectable connecting device itself (3 to 8) on the one hand, and on the other hand, the deformable parallelogram connecting the valves between one another and consisting of the bars 16 and the links with the fork 16A.

Said figures show the valve control jack which acts through a link 33 upon the shaft of the valve lying in the connection element 1 connected to the arm. Said jack is the control jack 34.

The control jack 7 of the emergency-disconnectable connecting device is fixed and acts upon the nut 8 of the link 4 of the emergency-disconnectable connecting device through a slidable carriage 35 mounted to the end of the rod of the jack 7; a pivot 36 of such mounting being capable of sliding in two parallel slots 37 and 38 formed in two fixed parallel supports 39.

The operation of this form of embodiment occurs in two steps. The first corresponds to the closing of the valves through the jack 34 from the position shown in figure 9 to the position shown in figure 10.

In the position shown in figure 10 with the valves being closed, the jack 7 can fulfil its purpose by acting upon the nut 8 of the link 4 of said emergency-disconnectable connecting device and through the slidable carriage 35.

For the event that the valve control of jack 34 would be out of operation, the jack 7 can fulfil a second function, i.e. in a first step closing the valve, the pivot 36 of carriage 35 of such jack causing the moving apart of the connecting rod 33 of the valve control jack 34 through contact therewith until said connecting rod is in the valve closing position, with the carriage continuing its movement in the slots 37—38 until it reaches the final position of the connecting rod 33 corresponding to the closing of the valves. In a second step, the pushing action of the jack being continued, an overstroke of the carriage 35 permits the latter to meet the nut 8 of the link 4 of the emergency-disconnectable connecting device thereby causing disconnection of elements 1 and 2.

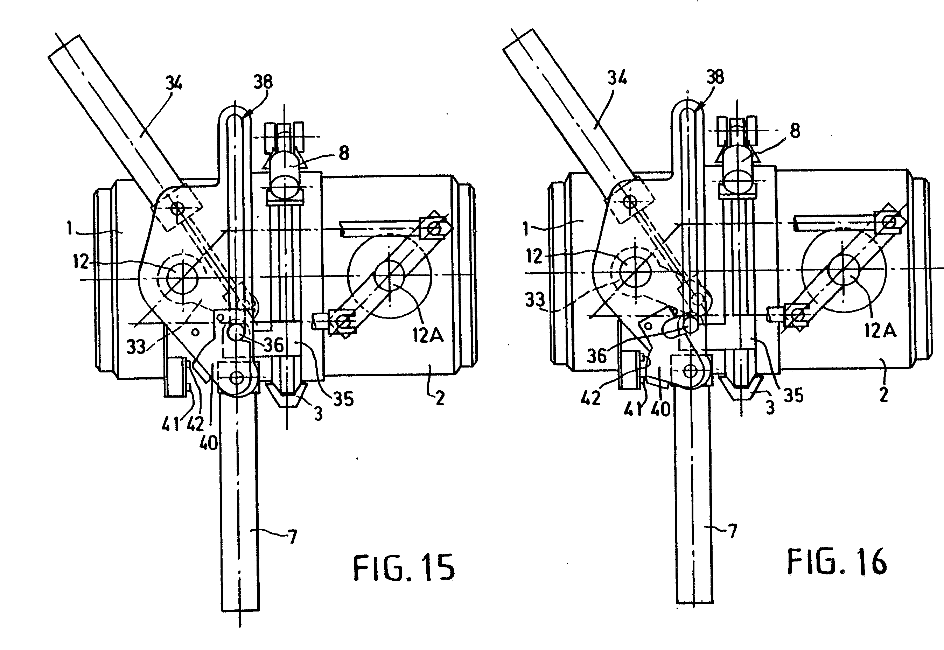

Therefore there is direct connection between the control jack 7 of the emergency-disconnectable connecting device and the valve closing control, there being the supplementary advantage consisting of causing the valve closing when for example the hydraulic circuit of the control jack of the valves is out of operation. According to a form of embodiment shown in figures 15 and 16, there is provided manual locking means intended for preventing disconnection when the arms are in a resting position or during the operation with the valves being closed.

Figure 15 shows the manual locking means in the locked position thereby enabling operation of the arm but inhibiting urgency disconnection.

The manual locking means consists of a pivotable hook 40 engaging the pivot 36 of the carriage 35, said manual locking means being associated with two sensors, a sensor 41 corresponding to an unlocked position of the emergency-disconnectable connecting device (3 to 8), and a sensor 42 corresponding to a locked position of said connecting device.

Figure 16 shows the manual locking means represented in an unlocked position inhibiting operation of the arm but authorizing urgency disconnection.

Finally, it will be understood that this invention was only described and represented in a preferential mode of embodiment and that equivalent parts can be substituted for its constitutive elements without departing from its scope.

Thus, according to a variation, the movable element 33 could move rotatably instead of slidingly.

## Claims

1. A safety arrangement for an emergency-disconnectable connecting device (3 to 8) of the type having a clamping collar with arcuate elements (3) articulated to one another and clampingly engaging the flanges of two fluid transfer elements (1, 2) brought into contact with one another at the time of connection, said connected elements (1, 2) each containing a valve and being connected one to a loading arm and the other to a tank, said emergency-disconnectable connecting device (3 to 8) also comprising a jack (7) for disconnecting the clamping collar and said valves being associated with a common valve control (12, 16, 16a), said safety arrangement being characterized in that it comprises pivotable link means (13, 14) for ensuring a connection or contact between said valve control (12, 16, 16a) and one of the elements of said jack (7) consisting of its body and its rod, allowing said jack (7) to effect disconnection when the valves are closed, but preventing it effecting untimely disconnection before completed closure of said valves.

2. An arrangement according to claim 1, characterized in that the connection between the valve control (12) and the body of the control jack (7) of the emergency-disconnectable connecting device (3 to 8) is realized by links (13, 14) permitting misalignment of said jack (7) whereby disconnection of the elements (1, 2) is no longer possible.

3. An arrangement according to claim 1 or 2, characterized in that misalignment of the control jack (7) of the emergency-disconnectable connecting device (3 to 8) is obtained by an angular deviation imposed upon said jack (7) which is hinged to a pivot (11) secured to one of the arcuate elements (3) of the emergency-disconnectable connecting device (3 to 8).

4. An arrangement according to any of claims 1 to 3, characterized in that the end of the rod of the control jack (7) of the emergency-disconnectable connecting device comprises a conical head (17) for cooperation with a V-shaped profiled groove (18) formed in a nut (8) of a link (4) of the emergency-disconnectable connecting device (3 to 8) articulated to one of the arcuate elements (3) such that a certain angle of aperture of the valves corresponds to a certain angle of deviation of the jack (7) which results in escape of the conical head (17) of the jack (7) in respect to the V-shaped groove (18) of the nut (8).

5. An arrangement according to claim 4, characterized in that an escape chamfer (19) is made on the nut (8) after the V-shaped profiled groove (18).

6. An arrangement according to any of claims 1 to 5, characterized in that it is provided with supplementary manual locking means comprising a slidable piece (23) engageable into a groove (22) formed in the rod of the jack (7) and also comprising sensors (31, 32) for detecting the position of the slidable piece (23) so that one sensor (31) detects the position of the slidable piece in the unlocked position authorizing emergency disconnection and the other sensor (32) the position of the slidable piece in the locked position inhibiting emergency disconnection.

7. An arrangement according to claim 1, characterized in that the contact between the valve control (12) and the rod of the control jack (7) of the emergency-disconnectable connecting device comprises a movable carriage (35) mounted at the end of the rod of the jack (7) the body of which is fixed, said carriage (35) being capable of contacting an element (33) controlling the valves during its movement toward a nut (8) of a link (4) of the emergency-disconnectable connecting device, articulated to one of the arcuate elements (3), said carriage (35) acting upon said element (33) when the valve closing control (34) did not work.

8. An arrangement according to claim 7, characterized in that the carriage (35) is provided with a pivot (36) slidable into at least one slot (37) formed in a fixed support (39), the element (33) for the control of the valves being a link fixed to a shaft (12) of one of the valves.

9. An arrangement according to claim 8, characterized in that the pivot (36) of the carriage (35) moves in two parallel slots (37, 38) formed in two fixed parallel supports (39).

10. An arrangement according to claim 8 or 9, characterized in that an overstroke of the carriage (35) after the moving aside of the link (33) by said carriage, in the event that the valve closing control (34) has not worked, permits said carriage (35) to meet the nut (8) of the link (4) of the emergency-disconnectable connecting device to provoke disconnection.

11. An arrangement according to any of claims 1 and 8 to 10, characterized in that it comprises a supplementary manual locking means (40) associated with two position sensors, a sensor (41) detecting an unlocked position of the emergency-disconnectable connecting device, and a sensor (42) detecting a locked position of said emergency-disconnectable connecting device.

12. An arrangement according to claim 11, characterized in that the manual locking means (40) is a pivotable hook engaging the pivot (36) of the carriage (35).

**Patentansprüche**

1. Sicherheitsanordnung für eine im Notfall lösbare Verbindungsvorrichtung (3 bis 8) des Typs, welcher eine Klemmanschette mit gewölbten Elementen (3) aufweist, welche aneinander angelenkt sind und welche mit den Flanschen von zwei Fluid - Übertragungselementen (1, 2) zusammenwirken, die zum Zeitpunkt der Verbindung miteinander in Kontakt gebracht worden sind, wobei diese miteinander verbundenen Elemente (1, 2) jeweils ein Ventil aufweisen und wobei eines von diesen mit einem Ladearm verbunden ist und das andere mit einem Tank, wobei diese im Notfall lösbare Verbindungsvorrichtung (3 bis 8) des weiteren einen Hebel (7) aufweist, um die Klemmanschette zu lösen und wobei diese Ventile mit einer üblichen Ventilsteuerung (12, 16, 16a) verbunden sind, dadurch gekennzeichnet, daß die Sicherheitsanordnung schwenkbare Verbindungseinrichtungen (13, 14) aufweist, um einen Verbindung oder einen Kontakt zwischen dieser Ventilsteuerung (12, 16, 16a) und einem der Elemente dieses Hebels (7) bestehend aus seinem Körper und seiner Stange, sicherzustellen, was diesem Hebel (7) erlaubt, das Lösen der Verbindung zu bewirken, wenn die Ventile geschlossen sind, aber dessen zur Unzeit erfolgende Lösung zu verhindern bevor diese Ventile vollständig geschlossen sind.

2. Anordnung gemäß Anspruch 1, dadurch gekennzeichnet, daß die Verbindung zwischen der Ventilsteuerung (12) und dem Körper des Steuerhebels (7) der im Notfall lösbaren Verbindungsvorrichtung (3 bis 8) mittels Verbindungseinrichtungen (13, 14) verwirklicht ist, welche die Auslenkung dieses Hebels (7) ermöglichen, wodurch das Lösen der Elemente (1, 2) nicht länger möglich ist.

3. Anordnung gemäß Anspruch 1 oder 2, dadurch gekennzeichnet, daß die Auslenkung des Steuerhebels (7) der im Notfall lösbaren Verbindungsvorrichtung (3 bis 8) durch eine diesen Hebel (7) betreffende Winkelabweichung erreicht wird, wobei dieser an einer Achse (11) angelenkt ist, die an einem dieser gewölbten Elemente (3) der im Notfall lösbaren Verbindungsvorrichtung (3 bis 8) befestigt ist.

4. Anordnung gemäß einem der Ansprüche 1 bis 3, dadurch gekennzeichnet, daß das Ende der Stange des Steuerhebels (7) der im Notfall lösbaren Verbindungsvorrichtung einen konischen Kopf (17) aufweist, zum Zusammenwirken mit einer V-förmig profilierten Nut (18), die in einem Teil (8) einer Verbindungseinrichtung (4) der im Notfall lösbaren Verbindungsvorrichtung (3 bis 8) gebildet ist, woebi diese Verbindungseinrichtung an einem der gewölbten Elemente (3) angelenkt ist, so daß ein bestimmter Öffnungswinkel der Ventile einer bestimmten Winkelauslenkung des Hebels (7) entspricht, was zu einem Abgehen des konischen Kopfes (17) des Hebels (7) im Bezug zu der V-förmigen Nut (18) des Teils (8) führt.

5. Anordnung gemäß Anspruch 4, dadurch gekennzeichnet, daß eine Abgangsschrägung (19) an der Nut (8) nach der V-förmig profilierten Nut (18) vorgesehen ist.

6. Anordnung gemäß einer der Ansprüche 1 bis 5, dadurch gekennzeichnet, daß sie mit zusätzlichen manuellen Verschlußmittel versehen ist, welche ein gleitfähiges Stück (23) aufweisen, die in eine Nut (22) eingreifen können, die in der Stange des Hebels (7) gebildet ist, sowie Sensoren (31, 32) um die Position des gleitfähigen Stückes (23) zu erkennen, so daß ein Sensor (31) die Position des gleitfähigen Stückes in der nicht geschlossenen Position erkennt und das Lösen im Notfall erlaubt und der andere Sensor (32) die Position des gleitfähigen Stückes in der geschlossenen Position erkennt, und das Lösen im Notfall verhindert.

7. Anordnung gemäß Anspruch 1, dadurch gekennzeichnet, daß der Kontakt zwischen der Ventilsteuerung (12) und der Stange des Steuerhebels (7) der im Notfall lösbaren Verbindungsvorrichtung einen beweglichen Schlitten (35) aufweist, der an dem Ende der Stange des Steuerhebels (7), dessen Körper fixiert ist, befestigt ist, wobei dieser Schlitten (35) dazu befähigt ist, in Kontakt mit einem Element (33) zu kommen, welches die Ventile während seiner Bewegung gegenüber einem Teil (8) einer Verbindung (4) der im Notfall lösbaren Verbindungsvorrichtung kontrolliert, wobei diese an einem der bogenförmigen Elemente (3) angelenkt ist, und wobei dieser Schlitten (35) auf dieses Element (33) wirkt, wenn die Ventilschließsteuerung (34) nicht arbeitet.

8. Anordnung gemäß Anspruch 7, dadurch gekennzeichnet, daß der Schlitten (35) mit einem Zapfen (36) versehen ist, der zumindest in einem Schlitz (37) gleiten kann, welcher in einem festen Träger (39) vorgesehen ist, wobei das Element (33) für due Steuerung der Ventile als Verbindung gestaltet ist, welche an einem Schaft (12) von einem der Ventile befestigt ist.

9. Anordnung gemäß Anspruch 8, dadurch gekennzeichnet, daß sich der Zapfen (36) des Schlittens (35) in zwei parallelen Schlitzen (37, 38) bewegt, welche in zwei befestigten parallelen Trägern (39) gebildet sind.

10. Anordnung gemäß Anspruch 8 oder 9, dadurch gekennzeichnet, daß ein Übergleiten des Schlittens (35) nach der Seitwärtsbewegung der Verbindung (33) durch diesen Schlitten, in dem Fall, in dem die Ventilschließkontrolle (34) nicht gearbeitet hat, es diesem Schlitten (35) ermöglicht auf das Teil (8) der Verbindung (4) der im Notfall lösbaren Verbindungsvorrichtung zu wirken, um das Lösen hervorzurufen.

11. Anordnung gemäß einem der Ansprüche 1 und 8 bis 10, dadurch gekennzeichnet, daß sie einem zusätzliche Verschlußeinrichtung (40) aufweist, die mit zwei Positionssensoren verbunden ist, und zwar einem Sensor (41), welcher eine nicht geschlossene Position der im Notfall lösbaren Verbindungsvorrichtung erkennt und einem Sensor (42), der eine geschlossene Position dieser im Notfall lösbaren Verbindungsvorrichtung erkennt.

12. Anordnung gemäß Anspruch 11, dadurch gekennzeichnet, daß das manuelle Verschlußmittel (40) ein schwenkbarer Haken ist, der mit dem Zapfen (36) des Schlittens (35) zusammenwirkt.

**Revendications**

1. Agencement de sécurité pour un dispositif de raccordement (3 à 8) à déconnexion d'urgence du type comportant un collier de serrage à éléments incurvés (3) articulés entre eux et enclenchés de façon serrée avec les brides de deux éléments (1, 2) de transfert de fluide amenés en contact l'un avec l'autre au moment du raccordement, lesdits éléments raccordés (1, 2) contenant chacun une vanne et étant raccordés, l'un à bras de chargement et l'autre à une citerne, le dispositif (3 à 8) de raccordement à déconnexion d'urgence comprenant également un vérin (7) destiné à déconnecter le collier de serrage et lesdites vannes étant associées à une commande commune (12, 16, 16a) de vannes, ledit agencement de sécurité étant caractérisé en ce qu'il comporte des moyens à biellettes pivotantes (13, 14) destinés à assurer une connexion ou un contact entre ladite commande de vannes (12, 16, 16a) et l'un des éléments dudit vérin (7) constitués par son corps et sa tige, permettant audit vérin (7) d'effectuer une déconnexion lorsque les vannes sont fermées, mais l'empêchant d'effectuer une déconnexion inopportune avant la fermeture complète desdites vannes.

2. Agencement selon la revendication 1, caractérisé en ce que la connexion entre le commande (12) de vannes et le corps du vérin (7) de commande du dispositif (3 à 8) de raccordement à déconnexion d'urgence est réalisée par des biellettes (13, 14) permettant un désalignement dudit vérin (7) afin qu'une déconnexion des éléments (1, 2) ne soit plus possible.

3. Agencement selon la revendication 1 ou 2, caractérisé en ce que le désalignement du vérin (7) de commande du dispositif (3 à 8) de raccordement à déconnexion d'urgence est obtenu par une déviation angulaire imposée audit vérin (7) qui est articulé sur un pivot (11) fixé à l'un des éléments incurvés (3) du dispositif (3 à 8) de raccordement à déconnexion d'urgence.

4. Agencement selon l'une quelconque des revendications 1 à 3, caractérisé en ce que l'extrémité de la tige du vérin (7) de commande du dispositif de raccordement à déconnexion d'urgence comprend une tête conique (17) destinée à coopérer avec une gorge (18) à profil en forme de V formée dans un écrou (8) d'une biellette (4) du dispositif (3 à 8) de raccordement à déconnexion d'urgence articulé sur l'un des éléments incurvés (3) de façon qu'un certain angle de d'ouverture des vannes corresponde à un certain angle de déviation du vérin (7), ce qui a pour résultat l'échappement de la tête conique (17) du vérin (7) par rapport à la gorge (18) en forme de V de l'écrou (8).

5. Agencement selon la revendication 4, caractérisé en ce qu'un chanfrein (19) d'échappement est réalisé sur l'écrou (8) après la gorge (18) profilée en forme de V.

6. Agencement selon l'une quelconque des revendications 1 à 5, caractérisé en ce qu'il comporte des moyens manuels supplémentaires de verrouillage comprenant une pièce coulissante (23) pouvant s'engager dans une gorge (22) formée dans la tige du vérin (7) et comprenant également des capteurs (31, 32) destinés à détecter la position de la pièce coulissante (23) afin qu'un capteur (31) détecte la position de la pièce coulissante dans la position déverrouillée autorisant une déconnexion d'urgence et que l'autre capteur (32) détecte la position de la pièce coulissante dans la position verrouillée empêchant une déconnexion d'urgence.

7. Agencement selon la revendication 1, caractérisé en ce que le contact entre la commande (12) de vannes et la tige du vérin (7) de commande du dispositif de raccordement à déconnexion d'urgence comprend un chariot mobile (35) monté à l'extrémité de la tige du vérin (7) dont le corps est fixe, ledit chariot (35) étant capable d'entrer en contact avec un élément (33) commandant les vannes pendant son mouvement vers un écrou (8) d'une biellette (4) du dispositif de raccordement à déconnexion d'urgence, articulé sur l'un des éléments incurvés (3), ledit chariot (35) agissant sur ledit élément (33) lorsque la commande (34) de fermeture des vannes netravaille pas.

8. Agencement selon la revendication 7, caractérisé en ce que le chariot (35) comporte un pivot (36) pouvant coulisser dans au moins une fente (37) formée dans un support fixe (39), l'élément (33) pour la commande des vannes étant une biellette fixée à un arbre (12) de l'une des vannes.

9. Agencement selon la revendication 8, caractérisé en ce que le pivot (36) du chariot (35) se déplace dans deux fentes parallèles (37, 38) formées dans deux supports parallèles fixes (39).

10. Agencement selon la revendication 8 ou la revendication 9, caractérisé en ce qu'un dépassement de course du chariot (35), après le mouvement de côté de la biellette (33) par ledit chariot, dans le cas où la commande (34) de fermeture des vannes n'a pas travaillé, permet audit chariot (35) de rencontrer l'écrou (8) de la biellette (4) du dispositif de raccordement à déconnexion d'urgence pour provoquer une déconnexion.

11. Agencement selon l'une quelconque des revendications 1 et 8 à 10, caractérisé en ce qu'il comprend des moyens manuels supplémentaires (40) de verrouillage associés à deux capteurs de position, un capteur (41) détectant une position déverrouillée du dispositif de raccordement à déconnexion d'urgence, et un capteur (42) détectant une position verrouillée dudit dispositif de raccordement à déconnexion d'urgence.

12. Agencement selon la revendication 11, caractérisé en ce que les moyens manuels de verrouillage (40) comprennent un crochet pivotant s'enclenchant avec le pivot (36) du chariot (35).

FIG. 1

FIG. 2

FIG.3

FIG.4

FIG. 6

FIG. 5

FIG. 7

FIG. 8

0 080 136

FIG.9          FIG.10

0 080 136

FIG. 12

FIG. 11

FIG. 13

FIG. 14

0 080 136

FIG. 15

FIG. 16

0 080 136